(19) Europäisches Patentamt
European Patent Office
Office européen des brevets

(11) Veröffentlichungsnummer: **0 058 872**
**B1**

(12) **EUROPÄISCHE PATENTSCHRIFT**

(45) Veröffentlichungstag der Patentschrift: **03.10.84**

(51) Int. Cl.³: **C 08 L 61/14**, C 08 G 8/28, C 08 K 5/17

(21) Anmeldenummer: **82100916.4**

(22) Anmeldetag: **09.02.82**

(54) **Härtbares Phenolformaldehydharz mit verbesserten elastischen Eigenschaften nach der Aushärtung.**

(30) Priorität: **25.02.81 DE 3106979**

(43) Veröffentlichungstag der Anmeldung: **01.09.82 Patentblatt 82/35**

(45) Bekanntmachung des Hinweises auf die Patenterteilung: **03.10.84 Patentblatt 84/40**

(84) Benannte Vertragsstaaten: **AT BE CH FR GB LI NL**

(56) Entgegenhaltungen: **DE - A - 3 006 961**

(73) Patentinhaber: **Th. Goldschmidt AG, Goldschmidtstrasse 100 Postfach 101461, D-4300 Essen 1 (DE)**

(72) Erfinder: **Fock, Jürgen, Dr., Mörsenbroicher Weg 114, D-4000 Düsseldorf 30 (DE)**
Erfinder: **Schedlitzki, Dietmar, Dr., Potthoffs Börde 18, D-4300 Essen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 058 872 B1

**Beschreibung**

Phenolharze sind einfache und billig zugängliche Harze und werden deshalb vielseitig verwendet. Typische Einsatzgebiete sind die Herstellung von Formkörpern aus mit Füllstoffen gefüllten Phenolharzen; die Imprägnierung von Trägerbahnen aus Papier und Glasfasergeweben zur Herstellung von Schichtkörpern oder zur Verklebung von flächigen Gebilden; die Herstellung von Schleifscheiben oder Trennscheiben unter Verwendung von Phenolharzen als Bindemittel der Schleifmaterialien; die Herstellung von Bremsklötzen und Bremsbelägen aus mit speziellen Füllstoffen, wie z.B. Asbestfasern, gefüllten Phenolharzen. Ein weiterer Verwendungszweck ist die Herstellung von Schichtstoffen mit einem Wabenkern aus insbesondere Polyamid oder mit einem Kern aus Hartschaum, insbesondere Polymethacrylimidschaum, wobei der Wabenkern bzw. der Schaumstoffkern mit den Decklagen mit einem phenolharzimprägnierten Glasfasergewebe klebend verbunden wird.

Bei vielen dieser vorgenannten Verwendungszwecke stört die dem Phenolharz eigene geringe Elastizität: Das ausgehärtete Phenolharz, die mit ihm hergestellten Formkörper oder die erhaltenen Klebfugen sind relativ spröde.

Es hat deshalb nicht an Versuchen gefehlt, die Phenolharze zu elastifizieren, wobei man entweder die zur Herstellung der Phenolharze verwendeten Rohstoffe modifiziert oder den Phenolharzen vor, während oder nach der Herstellung Modifizierungsmittel zusetzt.

Die interne Modifizierung der Phenolharze kann durch Veretherung der gebildeten Methylole erfolgen. Der Nachteil liegt jedoch in der starken Erhöhung der Härtungstemperatur, so dass sich diese Art der Modifizierung nur bei Einbrennlacken durchführen lässt. Es ist zwar möglich, die Härtungstemperatur durch Zusatz von Säuren zu erniedrigen, jedoch erhöhen die zugesetzten Säuren die Gefahr der Korrosion an metallischen Grenzflächen.

Eine weitere Möglichkeit der internen Modifizierung besteht in der Alkylierung der eingesetzten Phenole. Die Verwendung von Alkylphenolen als alleinige oder anteilige Reaktionspartner für den Formaldehyd hat jedoch den Nachteil, dass insbesondere bei längeren Alkylresten die Haftung der Phenolharze an den Grenzflächen erniedrigt wird. Ausserdem werden durch die Alkylierung die reaktiven, am Benzolkern befindlichen Wasserstoffreste zumindest teilweise ersetzt, so dass die Vernetzungsdichte der erhaltenen gehärteten Phenolharze verringert ist. Hierdurch verschlechtern sich die mechanischen Eigenschaften.

Externe Modifizierungsmittel, die den Phenolharzen vor, während oder nach der Harzsynthese zugesetzt werden können, sind in grosser Zahl beschrieben worden. Sie haben im allgemeinen den Nachteil, dass die Viskosität der Lösungen in organischen oder organisch-wässerigen Lösungsmitteln stark erhöht wird.

Beispiel eines externen Modifizierungsmittels ist Polyvinylformal. Um Polyvinylformal in Lösung zu überführen, muss man physikalisch meist nicht unbedenkliche Lösungsmittel verwenden. Setzt man stattdessen das Polyvinylformal in Form eines feinteiligen Pulvers zu, so muss man wegen des Erweichungspunktes des Polyvinylformals Härtungstemperaturen von > 130°C in Kauf nehmen. Ausserdem ist es schwierig, insbesondere in trägerhaltigen Materialien, wie z.B. Glasfasergeweben, eine gleichmässige Verteilung des Polyvinylformals durch die gesamte Schicht zu erreichen.

Man hat auch bereits Polymerisate aus Butadienacrylnitril (Nitrilkautschuk) zur Modifizierung vorgeschlagen und verwendet. Durch die starke Erhöhung der Viskosität der Lösungen in organischen Lösungsmitteln ist es nur möglich, Lösungen mit relativ niedrigem Feststoffgehalt einzusetzen. Ausserdem bedarf es auch hier einer hohen Härtungstemperatur von > 150°C.

Verwendet man Polyamide als externe Modifizierungsmittel, so wird die Wasseraufnahme des ausgehärteten Phenolharzes erhöht. Bei der Verwendung von derartig modifizierten Phenolharzen als Klebmittel zeigt sich auch nur eine geringfügige Erhöhung des Schälwiderstandes.

Eine eingehende Erläuterung des Standes der Technik ist in den Monographien von A. Bachmann und K. Müller „Phenoplaste", VEB Deutscher Verlag für Grundstoffindustrie, Leipzig (1973) und von A. Knop und W. Scheib „Chemistry and Application of Phenolic Resins", Springer-Verlag, Berlin, Heidelberg, New York (1979), zu finden.

Es besteht somit ein Bedarf an einem Modifizierungsmittel, welches das ausgehärtete Phenolformaldehydharz elastifiziert und die vorgenannten Nachteile vermeidet oder in ihrem Ausmass so reduziert, dass sie bei der technischen Anwendung nicht stören und blockiert werden können.

Überraschenderweise wurde nun gefunden, dass ein härtbares Phenolformaldehydharz mit einem Molverhältnis Phenol zu Formaldehyd von 1:0,6 bis 1:2,5 die gewünschte Verbesserung der elastischen Eigenschaften auweist, wenn es durch einen Gehalt von 3 bis 60 Gew.-% (bezogen auf Phenolformaldehydfestharz) Bis-(3-aminopropyl)polytetrahydrofuran eines Molgewichtes von 500 bis 3000 gekennzeichnet ist.

Bis-(3-aminopropyl)polytetrahydrofuran entspricht der allgemeinen Formel

$$H_2N-(CH_2)_3-O-\left[(CH_2)_4-O-\right]_n(CH_2)_3-NH_2$$

Bei einem Molgewichtsbereich von 500 bis 3000 liegt der Wert von n zwischen 5 und 40.

Die Herstellung des Produktes ist bekannt, das Produkt selbst im Handel erhältlich.

Im allgemeinen genügt bereits ein Zusatz von 10 bis 35 Gew.-% des Bis-(3-aminopropyl)polytetrahydrofurans (bezogen auf Phenolformaldehydfestharz).

Der bevorzugte Bereich des Molekulargewichtes des Bis-(3-aminopropyl)polytetrahydrofurans

ist der Bereich von 700 bis 2200. Dies entspricht einem n-Wert von 8 bis 29.

Das Modifizierungsmittel wird aufgrund seiner endständigen Aminogruppen bei der Kondensationsreaktion in das Harz eingebaut. Es ist deshalb als internes Modifizierungsmittel zu bezeichnen.

Um den Einbau des Modifizierungsmittels in das Gerüst des Phenolformaldehydharzes sicherzustellen, ist eine Verfahrensweise zur Herstellung des härtbaren Phenolformaldehydharzes bevorzugt, bei der das Bis-(3-aminopropyl)polytetrahydrofuran dem aus Phenol, Formaldehyd und Katalysator bestehenden Reaktionsgemisch vor oder während der in an sich bekannter Weise ablaufenden Kondensationsreaktion zugesetzt wird.

Es ist zwar auch möglich, das Modifizierungsmittel dem härtbaren Harzvorkondensat zuzusetzen. Jedoch ist dann nicht gewährleistet, dass bei der Aushärtung der Einbau des Modifizierungsmittels in das Gerüst des Phenolharzes quantitativ erfolgt.

Als härtbare Phenolharze kommen die aus dem Stand der Technik allgemeinbekannten Phenolharze in Frage. Wie sich aus dem Molverhältnis von Phenol zu Formaldehyd ergibt, können sowohl Novolake als auch Resole verwendet werden. Es können die üblichen Kondensationskatalysatoren verwendet werden. Es ist auch möglich, einen Teil des Phenols, vorzugsweise bis zu 50 Mol-%, durch seine Homologen, insbesondere n-Kresol, zu ersetzen.

Als Lösungsmittel für das härtbare, modifizierte Phenolformaldehydharz kommen niedere Alkohole, wie z.B. Ethanol oder Isopropanol, insbesondere in Mischung mit Wasser, in Frage.

Es ist ein besonderer Vorteil der erfindungsgemäss modifizierten Phenolharze, dass ihre Viskosität, wenn sie in Form der alkoholischen bzw. alkoholisch-wässerigen Lösungen vorliegen, nur mässig erhöht ist. Die Verbesserung der elastischen Eigenschaften zeigt sich in der beträchtlichen Erhöhung des Schälwiderstandes von Verbundkörpern, wie z.B. solchen mit einem Waben- oder Hartschaumkern.

Es war für den Fachmann überraschend, dass Bis-(3-aminopropyl)polytetrahydrofuran in derart ausgeprägter Weise die Elastizität der ausgehärteten Phenolformaldehydharze verbessert, da Verbindungen ähnlicher Struktur unwirksam oder nur wenig wirksam sind. So hat sich beispielsweise gezeigt, dass Polyoxypropylenamine der Formel

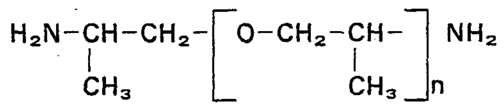

mit vergleichbarem Molekulargewicht keine ähnlich ausgeprägte Elastifizierung zeigen.

Es bleibt auch die Möglichkeit erhalten, die erfindungsgemäss modifizierten Phenolformaldehydharze mit anderen Polymeren oder Kunstharzen, z.B. mit Epoxidharzen, entsprechend dem Stand der Technik zu kombinieren, wobei beide Harze unter Härtungsbedingungen miteinander reagieren können. In manchen Fällen können derartige Gemische den Anwendungsbereich der Phenolformaldehydharze in vorteilhafter Weise erweitern.

Die erfindungsgemässen Phenolformaldehydharze eignen sich besonders für die Tränkung von Glasfasergeweben zur Herstellung von Prepregs, aber auch für die Tränkung von Vliesen oder Papieren, für die Formulierung von Klebern zur Verklebung von Reibbelägen, als Bindemittel in Schleif- und Trennscheiben oder zur Herstellung von Pressmassen.

In den folgenden Beispielen werden die Herstellung der erfindungsgemäss modifizierten, härtbaren Phenolformaldehydharze und deren Eigenschaften gezeigt. Alle Mengenangaben in den Beispielen sind Gewichtsteile.

*Beispiel 1*

Eine Mischung aus 188,2 g Phenol, 59,1 g 92%igem Paraformaldehyd, 2,4 g 50%iger Natronlauge, 79,6 g Bis-(3-aminopropyl)polytetrahydrofuran mit einem Molgewicht von 750 und 78 g Ethanol wird unter Rühren auf 85°C erwärmt und etwa 20 min bei dieser Temperatur gehalten, bis die exotherme Reaktion abgeklungen ist. Nach zweistündigem Erwärmen auf 89°C werden 26,3 g 92%igem Paraformaldehyd zugesetzt. Die Reaktionslösung wird für weitere 2½ bis 3 h auf 89°C erwärmt, bis eine Viskosität von 3500 mPa·s bei 25°C erreicht ist. Das erhaltene modifizierte Phenolformaldehydharz wird mit A bezeichnet.

*Beispiel 2*

Analog wird ein Phenolformaldehydharz B hergestellt, jedoch wird als Modifizierungsmittel die gleiche Menge Bis-(3-aminopropyl)polytetrahydrofuran mit einem Molgewicht von 2100 anstelle von 750 eingesetzt. Das Phenolformaldehydharz B hat eine Viskosität von 4000 mPa·s bei 25°C. Für die weitere Verarbeitung können die modifizierten Phenolformaldehydharze mit Ethanol oder Isopropanol oder auch mit Ethanol/Wasser-Gemischen auf die gewünschte Viskosität verdünnt werden.

*Herstellung von Phenolformaldehydharzprepregs und Prüfung von Verbunden mit Polyamidwaben*

Zur Herstellung der Phenolformaldehydharzprepregs wird ein handelsübliches Glasseidengewebe mit einem Flächengewicht von 110 g/m², dessen Glasfasern mit einem Silanhaftvermittler ausgerüstet sind, mit den erfindungsgemässen Phenolformaldehydharzen A und B getränkt und danach bei 110°C getrocknet, bis der Gehalt an flüchtigen Anteilen 7% beträgt. Der Gehalt an flüchtigen Anteilen wird durch 5 min Erhitzen des Prepregs bei 160°C und nachfolgender Bestimmung des Gewichtsverlustes ermittelt. Das Flächengewicht des Prepregs beträgt 225 g/m².

In ähnlicher Weise werden Prepregs mit den in der Tabelle 1 angeführten anderen Harzsystemen, die als Vergleich dienen, hergestellt.

Zur Herstellung der Verbunde aus den Phenolformaldehydharzprepregs wird als Wabenmaterial eine handelsübliche Wabe aus glasfaserverstärktem Polyamid eingesetzt, die beidseitig mit je einer Lage Prepreg beschichtet wird. Die Beschichtung wird in einer heizbaren Presse bei 125°C während 60 min unter einem Druck von 0,4 N/mm² vorgenommen. Danach wird der Verbund unter Beibehaltung des Pressdrucks bis auf 40°C gekühlt und entformt.

Zur Bestimmung der Klebfestigkeit der Prepregs auf der Polyamidwabe wird der Trommelschälversuch nach LN 53295 herangezogen, wobei das Prepreg von der Polyamidwabe abgeschält wird. Bei den nach LN 53295 anzufertigenden Prüfkörpern stimmen die Schälrichtung, die Wabenrichtung und die Herstellrichtung der Prepregs überein. Die Prepregs werden so auf die Wabe gelegt, dass die sogenannte Oberseite des Glasseidengewebes — das ist die Seite des Gewebes, auf der die Mehrzahl der sichtbaren Glasfasern quer zur Herstellrichtung laufen — der Wabe zugewandt ist. Die erhaltenen Festigkeitswerte sind in Tabelle 1 zusamengestellt, darunter auch Festigkeitswerte, die mit Vergleichsharzen des Standes der Technik erhalten wurden. Des weiteren ist der Feststoffgehalt der Tränkharzlösungen und die Art der Lösungsmittel aufgeführt.

Man erkennt, dass die erfindungsgemässen Phenolformaldehydharze A und B weitaus höhere Schälfestigkeitswerte liefern als nach dem Stand der Technik modifizierte Phenolformaldehydharze. Darüber hinaus enthalten letztere Harze zum Teil physiologisch bedenkliche Lösungsmittel und weisen teils geringere Feststoffgehalte auf.

*Tabelle 1*

*Trommelschälfestigkeit von Verbunden aus Phenolformaldehydharzprepregs und Polyamidwaben*

| Phenolformaldehydharz | | | Trommelschälfestigkeit nach LN 53295 Nmm/mm |
|---|---|---|---|
| Art der Modifizierung | Feststoffgehalt (Gew.-%) | Lösungsmittel | |
| erfindungsgemäss | | | |
| Harz A | 60 | Ethanol, Wasser | 12,1 |
| Harz B | 62 | Ethanol, Wasser | 11,5 |
| nicht erfindungsgemäss | | | |
| Veretherung mit n-Butanol | 60 | n-Butanol, Ethanol | 1,1 |
| Zusatz von tert.-Buthylphenol | 60 | Ethanol | 2,8 |
| Zusatz von Polyvinylformal | 28 | Toluol, Methanol | 6,8 |
| Zusatz von Nitrilkautschuk | 30 | Methylethylketon, Toluol | 3,2 |
| Zusatz von Polyamid | 32 | Ethanol | 3,5 |
| Zusatz von Polyoxypropylenamin Molgewicht 2000 | 55 | Ethanol | 6,5 |
| unmodifiziertes Harz | 65 | Ethanol, Wasser | 1,5 |

**Patentansprüche**

1. Härtbares Phenolformaldehydharz mit einem Molverhältnis Phenol zu Formaldehyd von 1:0,6 bis 1:2,5, gekennzeichnet durch einen Gehalt von 3 bis 60 Gew.-% (bezogen auf Phenolformaldehydfestharz) Bis-(3-aminopropyl)polytetrahydrofuran eines Molgewichtes von 500 bis 3000.

2. Phenolformaldehydharz nach Anspruch 1, gekennzeichnet durch einen Gehalt von 10 bis 35 Gew.-% (bezogen auf Phenolformaldehydfestharz) Bis-(3-aminopropyl)polytetrahydrofuran eines Molgewichtes von 500 bis 3000.

3. Phenolformaldehydharz nach einem der Ansprüche 1 oder 2, gekennzeichnet durch einen Gehalt an Bis-(3-aminopropyl)polytetrahydrofuran eines Molgewichtes von 700 bis 2200.

4. Phenolharz nach einem der vorhergehenden Ansprüche, dadurch gekennzeichnet, dass bis zu 70 Mol-% des Phenols durch Kresol ersetzt sind.

5. Verfahren zur Herstellung eines härtbaren Phenolformaldehydharzes nach einem oder mehreren der vorhergehenden Ansprüche, dadurch gekennzeichnet, dass man dem Reaktionsgemisch das Bis-(3-aminopropyl)polytetrahydrofuran vor oder während der in an sich bekannter Weise ablaufenden Kondensationsreaktion zusetzt.

**Claims**

1. Curable phenol-formaldehyde resin having a molar ratio of phenol to formaldehyde of 1:0.6 to 1:2.5, characterised in that it contains from 3 to 60% by weight (based on phenol-formaldehyde solid resin) of bis-(3-aminopropyl)-polytetrahydrofuran of molecular weight from 500 to 3,000.

2. Phenol-formaldehyde resin according to Claim 1, characterised in that it contains from 10 to 35% by weight (based on phenol-formaldehyde solid resin) of bis-(3-aminopropyl)-polytetrahydrofuran of molecular weight from 500 to 3,000.

3. Phenol-formaldehyde resin according to Claim 1 or 2, characterised in that it contains a bis-(3-aminopropyl)-polytetrahydrofuran of molecular weight from 700 to 2,200.

4. Phenolic resin according to one of the preceding claims, characterised in that up to 50 mol % of phenol are replaced by cresol.

5. Process for the preparation of a curable phenol-formaldehyde resin according to one or more of the preceding claims, characterised in that the bis-(3-aminopropyl)-polytetrahydrofuran is added to the reaction mixture before or during the condensation reaction which takes place in a manner known *per se*.

**Revendications**

1. Résine phénol/formaldéhyde durcissable ayant un rapport molaire phénol/formaldéhyde compris entre 1 :0,6 et 1 :2,5, caractérisée par une teneur de 3 à 60% en poids (relativement à la résine solide phénol/formaldéhyde) en bis-(3-aminopropyl)polytétrahydrofuranne d'un poids moléculaire de 500 à 3000.

2. Résine phénol/formaldéhyde selon la revendication 1, caractérisée par une teneur de 10 à 35% en poids (relativement à la résine solide phénol/formaldéhyde) en bis-(3-aminopropyl)polytétrahydrofuranne d'un poids moléculaire de 500 à 3000.

3. Résine phénol/formaldéhyde selon l'une des revendications 1 ou 2, caractérisée par une teneur en bis-(3-aminopropyl)polytétrahydrofuranne d'un poids moléculaire de 700 à 2200.

4. Résine phénolique selon l'une des revendications précédentes, caractérisée par le fait que jusqu'à 50 mol % du phénol est remplacé par du crésol.

5. Procédé de préparation d'une résine phénol/formaldéhyde durcissable selon une ou plusieurs des revendications précédentes, caractérisé par le fait que l'on ajoute le bis-(3-aminopropyl)polytétrahydrofuranne au mélange réactionnel avant ou pendant la réaction de condensation qui se déroule de manière en elle-même connue.